Europäisches Patentamt

European Patent Office

Office européen des brevets

(19)

(11) Publication number: **0 071 430**
**B1**

(12) **EUROPEAN PATENT SPECIFICATION**

(45) Date of publication of patent specification: **05.03.86**

(21) Application number: **82303898.9**

(22) Date of filing: **23.07.82**

(51) Int. Cl.⁴: **B 01 J 3/02,** B 01 J 8/00 //
C08F2/34, C08F10/00

(54) **Fluidized bed discharge process.**

(30) Priority: **28.07.81 US 287815**

(43) Date of publication of application:
**09.02.83 Bulletin 83/06**

(45) Publication of the grant of the patent:
**05.03.86 Bulletin 86/10**

(84) Designated Contracting States:
**BE DE FR GB IT SE**

(56) References cited:
**GB-A- 958 414**
**GB-A-1 375 741**
**US-A-3 410 791**

(73) Proprietor: **UNION CARBIDE CORPORATION**
**39 Old Ridgebury Road**
**Danbury Connecticut 06817 (US)**

(72) Inventor: **Aronson, Robert George**
**218 Sutherland Drive**
**South Charleston West Virginia 25303 (US)**

(74) Representative: **Baverstock, Michael George**
**Douglas et al**
**BOULT, WADE & TENNANT 27 Furnival Street**
**London, EC4A 1PQ (GB)**

EP 0 071 430 B1

Courier Press, Leamington Spa, England.

## Description

The present invention relates to a fluidized bed discharge process and, more particularly, to a process for discharging solid particulate polyolefin resin from a high pressure fluidized bed polymerisation reactor vessel to a lower pressure zone, wherein separation of the solid polyolefin resin from the fluidizing gas is effected, desirably with the loss of fluidizing gas from the fluidized bed being minimized.

The Union Carbide process for the manufacture of polyolefin resins involves the polymerization of olefin monomers in a fluidized bed reactor. Such prior Union Carbide process for the manufacture of polyolefin resins is disclosed in U.S.—A— 4,003,712, 4,032,391, and 4,255,542. As therein defined, polyolefin resin is discharged from the reaction zone through a gas lock zone and the unreacted monomer that accompanies the resin is vented and recycled back to the reaction zone by compression. The polyolefin resin product is then transferred to downstream equipment by a conventional dilute phase conveying system.

A study was initiated to find an alternative product discharge system because of the high investment, high operating cost and complexity associated with the prior gas lock zone process. The fluid bed discharge process of the present invention is an outcome of this study.

The overall result is a major reduction in investment, operating cost, and complexity for the manufacture of polyolefin resin using the present fluid bed discharge process in conjunction with the Union Carbide process for the manufacturing of polyolefin resins employing a fluidized bed reactor. Similar results are achievable for other fluidized bed discharge applications.

United States Patent Specification No. 3,410,791 describes a process of discharging spent catalyst solids from a hydrogenation reaction which has some similarities to the process with which the present invention is concerned. However, it should be noted that the process described is not concerned with a fluidised bed but rather with a three-phase bubbling slurry bed of solid, gas and liquid. Furthermore, the venting of the settling zone as described therein is to a different point and for a different purpose than that in the present invention, as hereafter described, and also the vent-back reintroduction point requirement of the separated gas in the present invention is not met in the prior process.

U.K. Patent Specification No. 1,375,741 also describes the handling of catalyst solids but, as in the case of U.S. Patent Specification No. 3,410,791 is concerned with a three-phase liquid, gas and solid reaction rather than a gas-phase fluidised bed, and the process described vents from the separation tank to the reaction vessel liquid phase material, rather than gas as in the process of the present invention. Any gas in the separation zone of the process described in the prior specification can come only from independent hydrocarbon, rather than gas from the reactor being vented back to the reactor, as described hereafter in the process of the present invention.

In accordance with the present invention there is provided a discharge process for transferring solid particulate polyolefin resin from a high pressure fluidized bed polymerisation reactor vessel to a lower pressure through successive zones of settling and transfer, wherein said solid polyolefin resin is maintained in a fluidized condition by the passage of a gas stream through said high pressure vessel from the base of said bed to the top of said vessel, comprising: transferring fluidized solid particulate polyolefin resin from a point in said vessel below the top of said bed, through the actuation of suitable valving means, to a lower pressure settling zone or zones wherein said solid polyolefin resin is separated from said gas which is vented back directly or indirectly into said vessel at a point above the point of transferring and near to the top of the fluidized bed upon the completion of transferring of solid particulate polyolefin resin to said settling zone, actuating associated valving means to arrest all solid and gas flow to and from said settling zone; and actuating valve means associated with said settling zone to transfer said solid particulate polyolefin resin from said settling zone to said transfer zone or transfer the gas from one said settling zone to a second settling zone.

In the preferred embodiments, the solid polyolefin resin is intermittently discharged from the fluidized bed using a process that employs a vented settling zone and transfer zone. The vented settling zone serves to receive and separate solids and gas discharged from the fluid bed. After the zone is filled, the solids are transported to a transfer zone. The settling zone pressure equalizes with the transfer zone pressure at an intermediate pressure. After the transfer zone is isolated from the settling zone, the transfer zone pressure decreases from the intermediate pressure to approximately atmospheric pressure during solids transfer to downstream processing equipment. During the next fluidized bed discharge, the settling zone pressure increases from the intermediate pressure to the fluidized bed pressure. Prior to receipt of solids, the vented settling zone is empty and at the intermediate pressure. The transfer zone is empty and at approximately atmospheric pressure prior to receipt of solids.

Two embodiments of the present invention will now be described, by way of example, with reference to the accompanying drawings, in which:—

Fig. 1 is a schematic view of apparatus suitable for the practice of the fluidized bed discharge process of the invention; and

Fig. 2 is a schematic view of alternate embodiment of apparatus suitable for practising the fluid bed discharge process of the invention.

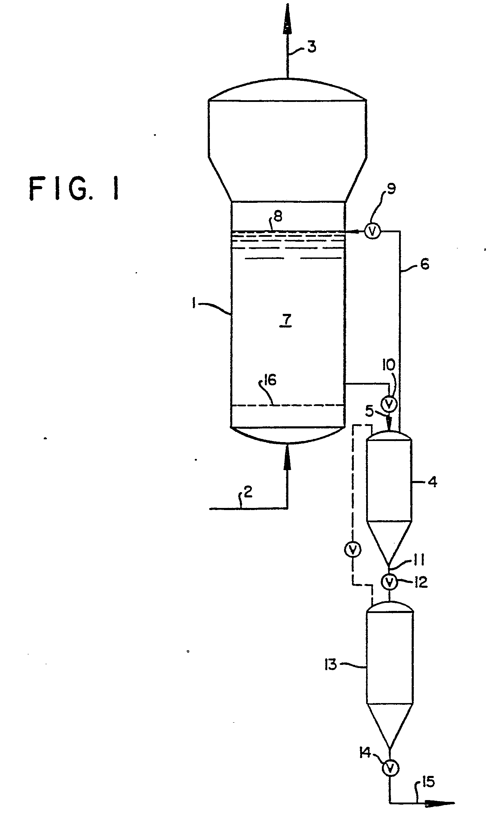

Referring to Fig. 1 of the drawings, the preferred embodiment of apparatus for carrying out the process of the invention is shown. Vessel 1 contains a solid fluidized bed 7 with a gas stream entering inlet line 2 and leaving vent line 3. A vented settling tank 4, located externally and preferably below the fluidized bed 7, is connected to the bed by a solid discharge line 5 and a vent line 6. The vent line 6 is directly connected to vessel 1 near the level of fluidized solids 8 and the solids discharge line 5 is connected to the lower part of vessel 1 preferably near the distributor plate 16. A transfer tank 13 is located below and is connected to the settling tank 4 by line 11 and is connected to downstream processing equipment by line 15. Initially vessel 1 and 4 and 13 are isolated from each other and from downstream equipment by valves 9, 10, 12 and 14. Solids and gas are discharged from vessel 1 into the settling tank 4 by opening valves 9 and 10 while keeping valve 12 closed. The settling tank pressure initially increases to that of vessel 1 and then the differential pressure across the fluidized bed of solids 7 is the driving force for solids and gas flow through line 5. The solids and gas separate in the settling tank 4 and the gas is returned to vessel 1 through line 6 by displacement with additional solids and gas entering the settling tank 4. After the settling tank 4 fills with settled solids and some gas, the settling tank 4 is isolated from vessel 1 by closing valves 9 and 10. The solids are then transferred by gravity, or by gravity and pressure differential, from the settling tank 4 to the transfer tank 13 through line 11 by opening valve 12. With the solids in the transfer tank 13 and the tank pressure equalized, valve 12 is closed. The settling tank 4 is now ready to·start another discharge cycle or it can wait until the transfer tank 13 is finished transferring the solids to downstream equipment. The solids are then transported from the transfer tank 13 to downstream equipment by opening valve 14. Solid transfer can be by conventional solids handling equipment or by high pressure conveying using the pressurized gas that is entrained with the solids (and additional gas, if required). After the solids are transported from the transfer tank 13, valve 14 is closed and the transfer tank is ready for another cycle.

Settling tank size is a function of the desired solids discharge rate and batch cycle time. The transfer tank is approximately equal in size to the settling tank. Excessive transfer tank volume will result in unnecessary gas losses from the fluidized bed system.

Accordingly, the invention provides an improved method for discharging solids from a fluidized bed while limiting the quantity of gas accompanying the solids. By limiting the gas leaving the fluidized bed, equipment required to recycle the entrained gas can be reduced in size or eliminated. Limiting the gas leaving the fluidized bed is attributed to: filling the vented settling tank with settled solids, and then isolating the solids from most of the gas.

The vented settling tank and transfer tank concept lends itself to high pressure conveying of solids to downstream processing equipment, simplifying the process of transferring solids away from the fluid bed system.

The principles or methods of operation associated with the fluid bed discharge process of the invention may be altered and extended without losing the advantages of the invention by:

1. The solid discharge line that connects the vented settling tank and fluidized bed can be connected to the bottom of the fluidized bed instead of the side;

2. A vent line may be connected between the settling tank and the transfer tank to enhance displacement of gas by solids entering the transfer tank (see dotted line of Fig. 1);

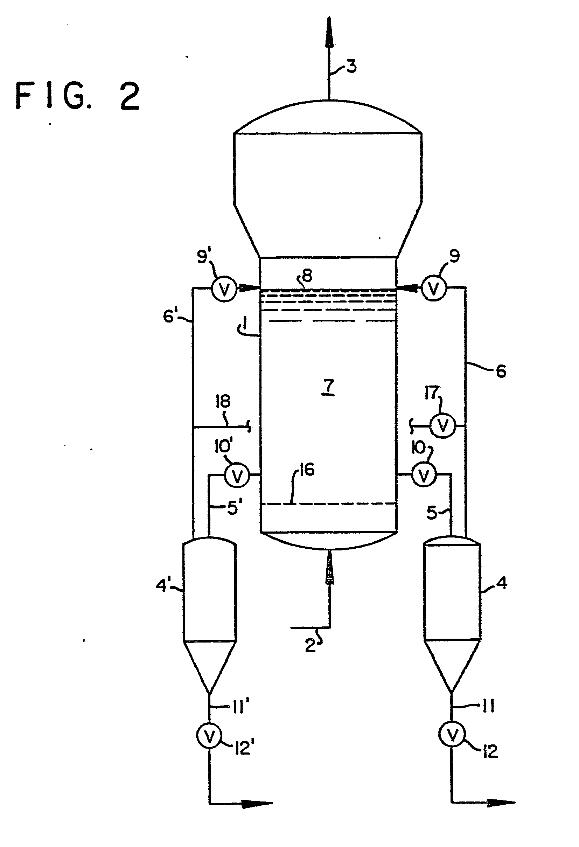

3. Instead of transferring the solids from the settling tank to the transfer tank, two settling tanks operated in parallel and alternating sequentially, can be used where the gas is transferred between the tanks to reduce the entrained gas (see Fig. 2 embodiment);

4. Any number of transfer tank(s) and/or settling tank(s) can be connected in series or parallel or combination thereof. Each additional tank used to reduce the pressure of the gas remaining with the solids further reduces the quantity of gas leaving the system with the solids; and

An alternate schematic embodiment of apparatus for carrying out the process of the invention is shown in Fig. 2 of the drawings. Solids are intermittently discharged from a high pressure vessel containing a fluidized bed of solids using a process that employs two vented settled tanks operated in parallel and alternating sequentially where gas is vented from the solid prior to discharging the solids to a lower pressure. One vented settling tank serves to receive solids and gas discharged from the fluid bed. After the tank fills with solids, some of the gas entrained with the solids is vented to a second settling tank which serves as a temporary gas receiver later indirectly venting to the reaction vessel. The solids are then transferred from the settling tank to a lower pressure while minimizing gas losses. The discharge operation is continued, alternating which settling tank receives the solids and gas from the fluidized bed.

Fig. 2 of the drawings shows a vessel 1 which contains a solid fluidized bed 7 with a gas stream entering through line 2 and leaving through line 3. Two vented settling tanks 4, 4', located externally of, and preferably below, the fluidized bed 7, are connected to the bed by solid discharge lines 5, 5' and vent lines 6, 6'. The vent lines 6, 6' are connected to vessel 1 near the level of fluidized solids 8 and the solids discharge lines 5, 5' are connected to the lower part of vessel 1 preferably near the distributor plate 16. A gas transfer line 18 connects the two settling tanks 4, 4'. Initially vessel 1 and tanks 4 and 4' are isolated from each other and from downstream equipment by valves 9, 9', 10, 10', 12, 12', and 17. Solids and gas are discharged from vessel 1 into one of the settling tanks, say 4, by opening valves 9 and 10 while keeping valve 12 closed. The settling tank pressure initially increases to that of vessel 1 and then the differential pressure across the fluidized bed of solids 7 is the driving force for solids and gas flow through line 5. The solids and gas separate in the settling tank 4 and the gas is returned to vessel 1 through line 6 by displacement with additional solids and gas entering the settling tank 4. After the settling tank 4 fills with settled solids and some gas, the settling tank 4 is isolated from vessel 1 by closing valves 9 and 10. Then some of the gas in tank 4 is transferred from the settling tank 4 to the settling tank 4' through line 18 by opening valve 17. With the gas transferred to tank 4' and the tank pressures equalized, valve 17 is closed. The settling tank gas is then vented to vessel 1 through line 6' by opening valve 9'. The settling tank 4' is now ready to start another discharge cycle or it can wait until the settling tank 4 is finished transferring the solids to downstream equipment. The solids are transported from the settling tank 4 to downstream equipment by opening valve 12. Solid transfer can be effected by conventional solids handling equipment or by high pressure conveying using the pressurized gas that is entrained with the solids (and additional gas, if required). After the solids are transported from the settling tank 4, valve 12 is closed and the settling tank 4 is ready for another cycle. The sequential discharge of solids from vessel 1 may be continued by alternating between 4 and 4' as the lead tank.

In the practice of the process of the invention in conjunction with the Union Carbide process for the polymerization of olefine the polymerization reaction takes place in a fluidized bed reactor that operates at about 2.1 $MN/M^2$ (300 psig) and at temperatures of between 80°C and 110°C. Product flows intermittently from the reactor to the discharge process. Depending on production rate, approximately 20 to 30 discharges are taken an hour. The discharge process cycle time (i.e., the time required to receive, handle, and transfer the product) is approximately 1.5 to 2.5 minutes depending on product properties, installation, and reactor size. Settled resin fills the settling tank to above 90% of the tank volume. Resin discharge rate from the reactor to the settling tank is of the order of 25.2 to 37.8 Kg/s (200,000—300,000 lb/hr) which is a function of several, if not many, process variables. The settling tank normally operates from 0.69 to 2.1 $MN/m^2$ (100 psig to 300 psig). The transfer tank normally operates from 0 to 0.77 $MN/m^2$ (0 psig to 110 psig) and as high as 1.0 $MN/m^2$ (150 psig). Settling tank volume is a function of production rate.

## Claims

1. A discharge process for transferring solid particulate polyolefin resins from a high pressure fluidized bed polymerization reactor vessel to a lower pressure through successive zones of settling and transfer, wherein said solid polyolefin resin is maintained in a fluidized condition by the passage of a gas stream through said high pressure vessel from the base of said bed to the top of said vessel, comprising: transferring fluidized solid particulate polyolefin resin from a point in said vessel below the top of said bed, through the actuation of suitable valving means, to a lower pressure settling zone or zones wherein said solid polyolefin resin is separated from said gas which is vented back directly or indirectly into said vessel at a point above the point of transferring and near the top of the fluidized bed; upon the completion of transferring of said solid particulate polyolefin resin to said settling zone, actuating associated valving means to arrest all solid and gas flow to and from said settling zone; and actuating valve means associated with said settling zone to transfer said solid particulate polyolefin resin from said settling zone to said transfer zone or transfer the gas from one said settling zone to a second settling zone.

2. A process as claimed in claim 1, wherein said upper portions of said settling zone and said transfer zone may be pressure equalized by providing connecting conduit means.

3. A process as claimed in claim 1 or claim 2 further comprising the steps of, upon the completion of transferring of solid polyolefin resin to said transfer zone or transferring of gas to said second settling zone, actuating associated valve means to arrest all solid and gas flow to and from said transfer zone or said second settling zone; and actuating valve means associated with either said transfer zone or said first settling zone to discharge solid polyolefin resin from either said transfer zone or said first settling zone, as the case may be.

4. A discharge process for transferring solid particulate polyolefin resins from a high pressure fluidized bed polymerization reactor vessel to a lower pressure through successive zones of settling and transfer wherein said solid polyolefin resin is maintained in a fluidized condition by the passage of a gas stream through said high pressure vessel from the base of said bed to the top of said vessel, comprising the steps of:

(a) transferring fluidized solid particulate polyolefin resin from a point in said vessel below the top of said bed, through the actuation of suitable valving means, to a lower settling zone wherein said solid polyolefin resin is separated from said gas which is vented back into said vessel at a point above the point of transferring and near to the top of the fluidized bed;

(b) upon the completion of transferring of said solid particulate polyolefin resin to said settling zone, actuating associated valving means to arrest all solid and gas flow to and from said settling zone;

(c) actuating valve means associated with said settling zone to transfer the gas from one settling zone to a second settling zone;

(d) upon completion of transferring said gas from one to said second settling zone, actuating associated valve means to arrest all solid and gas flow to and from said transfer zone; and

(e) actuating valve means associated with said one settling zone to discharge solid polyolefin resin from said one settling zone.

## Patentansprüche

1. Entleerungsverfahren zum Überführen fester, teilchenförmiger Polyolefinharze aus einem Hochdruck-Wirbelbett-Polymerisationsreaktionsgefäß zu niedrigeren Druckbedingungen durch aufeinanderfolgende Absetz- und Überführungszonen, worin das feste Polyolefinharz in verwirbeltem Zustand gehalten wird, indem man durch das Hochdruck-Gefäß von der Basis des Bettes zum Kopf des Gefäßes einen Gasstrom hindurchleitet, das die Merkmale umfaßt: das Überführen des verwirbelten, festen, teilchenförmigen Polyolefinharzes durch Betätigung geeigneter Ventilvorrichtungen von einem Punkt im Gefäß unterhalb des Kopfes des Bettes zu einer oder mehreren Absetzzonen mit niedrigerem Druck, worin das feste Polyolefinharz vom Gas abgetrennt wird, das direkt oder indirekt an einen Punkt oberhalb des Überführungspunktes und nahe dem Kopf des Wirbelbettes in das Gefäß zurückfließen gelassen wird; nach Beendigung des Überführens des festen, teilchenförmigen Polyolefinharzes in die Absetzzone das Betätigen damit verbundener Ventilvorrichtungen, um den gesamten Feststoff- und Gasfluß zu und aus der Absetzzone anzuhalten; und Betätigen von mit der Absetzzone in Verbindung stehenden Ventilvorrichtungen zum Überführen des festen teilchenförmigen Polyolefinharzes aus der Absetzzone in die Überführungszone, oder zum Überführen des Gases aus einer Absetzzone in eine zweite Absetzzone.

2. Verfahren nach Anspruch 1, in welchem die oberen Abschnitte des Absetzzone und der Überführungszone durch Anordnung verbindender Leitungen druckausgeglichen sein können.

3. Verfahren nach Anspruch 1 oder 2, das weiter die Stufen umfaßt: nach Beendigung des Überführens des festen Polyolefinharzes in die Überführungszone oder des Überführens des Gases in die zweite Absetzzone, Betätigung damit verbundener Ventilvorrichtungen, um den gesamten Feststoff- und Gasfluß zu und aus der Überführungszone oder der zweiten Absetzzone anzuhalten; und Betätigung von Ventilvorrichtungen, die entweder mit der Überführungszone oder der ersten Absetzzone in Verbindung stehen, um das feste Polyolefinharz entweder aus der Überführungszone oder der ersten Absetzzone, je nach den vorliegenden Gegebenheiten, zu entleeren.

4. Entleerungsverfahren zum Überführen fester, teilchenförmiger Polyolefinharze aus einem Hochdruck-Wirbelbett-Polymerisationsreaktorgefäß zu niedrigeren Druckbedingungen durch aufeinanderfolgende Absetz- und Überführungszonen, worin das feste Polyolefinharz in verwirbeltem Zustand gehalten wird, indem man von der Basis des Bettes zum Kopf des Gefäßes einen Gasstrom durch das Hochdruckgefäß hindurchleitet, umfassend die Stufen des

(a) Überführens des verwirbelten, festen, teilchenförmigen Polyolefinharzes von einem Punkt im Gefäß unterhalb des Kopfes des Bettes durch Betätigung geeigneter Ventilvorrichtungen zu einer niedrigeren Absetzzone, in welcher das feste Polyolefinharz vom Gas abgetrennt wird, das an einem Punkt oberhalb des Überführungspunktes und nahe dem Kopf des Wirbelbettes in das Gefäß zurückfließen gelassen wird;

(b) nach beendetem Überführen des festen, teilchenförmigen Polyolefinharzes in die Absetzzone, des Betätigens damit verbundener Ventilvorrichtungen, um den gesamten Feststoff- und Gasfluß zu und aus der Absetzzone anzuhalten;

(c) des Betätigens von mit der Absetzzone in Verbindung stehenden Ventilvorrichtungen zum Überführen des Gases aus einer Absetzzone in eine zweite Absetzzone;

(d) nach beendetem Überführen des Gases aus einer in die zweite Absetzzone, des Betätigens damit verbundener Ventilvorrichtungen, um den gesamten Feststoff- und Gasfluß zu und aus dieser Überführungszone anzuhalten; und

(e) des Betätigens von mit einer Absetzzone in Verbindung stehenden Ventilvorrichtungen, um das feste Polyolefinharz aus dieser Absetzzone zu entleeren.

## Revendications

1. Procédé de décharge pour transférer des résines polyoléfiniques solides en particules du récipient d'un réacteur de polymérisation à lit fluidisé sous haute pression vers une pression plus basse à travers des zones successives de sédimentation et de transfert, dans lequel ladite résine polyoléfinique solide est maintenue dans un état fluidisé par le passage d'un courant gazeux à travers ledit récipient sous haute pression depuis la base du lit vers le sommet du récipient, comprenant: le transfert de résine polyoléfinique solide fluidisée en particules depuis un point dudit récipient au-dessous du sommet du lit, par l'actionnement d'un ensemble convenable de vannes, vers une ou plusieurs zones de sédimentation à plus basse pression où ladite résine polyoléfinique solide est séparée du gaz qui est renvoyé directement ou indirectement audit récipient en un point situé au-dessus du point de transfert et à proximité du sommet du lit fluidisé; une fois terminé le transfert de ladite résine polyoléfinique solide en particules vers ladite zone de sédimentation, l'actionnement d'un ensemble associé de vannes pour arrêter tout écoulement de matière solide et de gaz vers la zone de sédimentation et depuis cette zone; et l'actionnement de vannes associées à ladite zone de sédimentation pour transférer la résine polyoléfinique solide en particules de la zone de sédimentation vers la zone de transfert ou pour transférer le gaz de l'une desdites zones de sédimentation vers la seconde zone de sédimentation.

2. Procédé suivant la revendication 1, dans lequel les portions supérieures de la zone de sédimentation et de la zone de transfert peuvent être égalisées en pression par la présence de conduits de communication.

3. Procédé suivant la revendication 1 ou la revendication 2, comprenant en outre les étapes qui consistent, une fois terminé le transfert de la résine polyoléfinique solide vers ladite zone de transfert ou le transfert du gaz vers la seconde zone de sédimentation, à actionner des vannes associées pour arrêter tout écoulement de matière solide et de gaz vers la zone de transfert et depuis cette zone ou vers et depuis la seconde zone de sédimentation; et à actionner des vannes associées à la zone de transfert ou à la première zone de sédimentation pour décharger la résine polyoléfinique solide de la zone de transfert ou de la première zone de sédimentation, selon le cas.

4. Procédé de décharge pour le transfert de résines polyoléfiniques solides en particules du récipient d'un réacteur de polymérisation à lit fluidisé à haute pression vers une pression plus basse à travers des zones successives de sédimentation et de transfert, dans lequel ladite résine polyoléfinique solide est maintenue dans un état fluidisé par le passage d'un courant de gaz à travers ledit récipient à haute pression depuis la base du lit vers le sommet du récipient, comprenant les étapes qui consistent:

(a) à transférer de la résine polyoléfinique solide fluidisée en particules depuis un point situé dans le récipient au-dessous de la partie supérieure du lit, par l'actionnement d'un ensemble convenable de vannes, vers une zone inférieure de sédimentation où ladite résine polyoléfinique solide est séparée du gaz qui est renvoyé au récipient en un point situé au-dessus du point de transfert et à proximité du sommet du lit fluidisé;

(b) lorsque le transfert de ladite résine polyoléfinique solide en particules vers ladite zone de sédimentation est terminé, à actionner des vannes associées pour arrêter la totalité de l'écoulement de matière solide et de gaz vers la zone de sédimentation et depuis cette zone;

(c) à actionner des vannes associées à ladite zone de sédimentation pour transférer le gaz d'une zone de sédimentation à une seconde zone de sédimentation;

(d) lorsque le transfert du gaz d'une zone de sédimentation à la seconde zone de sédimentation est terminé, à actionner des vannes associées pour arrêter tout écoulement de matière solide et de gaz vers la zone de transfert et depuis cette zone; et

(e) à actionner des vannes associées à ladite zone de sédimentation pour décharger de la résine polyoléfinique solide depuis cette zone de sédimentation.

FIG. I

0 071 430

FIG. 2